# FASCICULE DE BREVET EUROPEEN

(11) **EP 1 416 676 B1**
(45) Date de publication et mention de la délivrance du brevet: **15.08.2012**
(21) Numéro de dépôt: 03103987.8
(22) Date de dépôt: 28.10.2003
(51) Int. Cl.: H04L 12/28, H04W 74/08

(54) **Procédé d'allocation pour un support en diffusion**
Mediumzugriffsverfahren
Method for media access control

(30) Priorité: 31.10.2002 FR 0213702
(43) Date de publication de la demande: 06.05.2004
(73) Titulaire: Thales, 92200 Neuilly Sur Seine (FR)
(72) Inventeur: Paul, François, 94117 CX, ARCUEIL (FR)
(74) Mandataire: Dudouit, Isabelle

(56) Documents cités:
- US-A- 5 515 035
- US-A- 5 673 031
- US-A1- 2002 067 736
- US-B1- 6 317 436
- US-B1- 6 389 284
- STEER D G: "COEXISTENCE AND ACCESS ETIQUETTE IN THE UNITED STATES UNLICENSED PCS BAND A LISTEN-BEFORE-TRANSMIT PROTOCOL CONTROLS THE FLOW OF TRAFFIC" IEEE PERSONAL COMMUNICATIONS, IEEE COMMUNICATIONS SOCIETY, US, vol. 1, no. 4, 1 octobre 1994 (1994-10-01), pages 36-43, XP000478096 ISSN: 1070-9916

## Description

L'invention concerne notamment un procédé d'allocation d'accès de plusieurs stations à un réseau en diffusion.

Sous l'expression « réseau en diffusion », la description associe un milieu sur lequel plusieurs dispositifs ou stations échangent des informations ou des messages et où les différents postes peuvent recevoir. Par exemple, le milieu de diffusion peut être la voie radio et les stations des postes radio émetteurs/récepteurs.

Les mécanismes actuellement utilisés pour l'allocation de l'accès de stations à un support en diffusion, par exemple la voie radio, sont basés ou bien sur un ordonnancement préalable, tel que le protocole TDMA (Time Division Multiple Access) ou encore sur un ordonnancement calculé indépendamment par chaque station accédant au support, avec introduction de composantes aléatoires et de rétroactions de manière à diminuer l'effet des collisions (exemples : « slotted Aloha » et adaptation de la probabilité d'accès).

L'ordonnancement préalable (TDMA) présente l'avantage de garantir, pour chaque station, un délai minimum d'accès au réseau et une proportion d'utilisation minimum du support pour chaque station. Il présente toutefois l'inconvénient de ne pas adapter cette allocation aux besoins effectifs de chaque station, ces besoins pouvant être variables dans le temps. Il peut donc y avoir une disproportion entre les performances que le support de diffusion est capable d'offrir et celles qui sont réellement obtenues.

Les algorithmes d'ordonnancement avec adaptation calculés indépendamment sur chaque station présentent l'avantage de s'adapter à l'utilisation effective du support par les différentes stations. Toutefois, leurs spécifications font systématiquement appel à l'introduction délibérée de phénomènes aléatoires et à des mécanismes de rétroaction entre les différentes stations. Les variables d'état de l'algorithme sur une station varient en fonction du comportement des autres stations. D'autre part, ces algorithmes ne prétendent pas éliminer les collisions. Ils les prennent en compte, dans leur fonctionnement, de manière à réduire leur fréquence. L'ensemble des stations qui utilise un tel algorithme constitue donc un système complexe dont il est pratiquement impossible de démontrer, a priori, le bon fonctionnement.

Le brevet US 5 515 035 fournit un accès au réseau dans le cadre d'une transmission point à point (bidirectionnelle). L'absence de collision entre plusieurs stations lors d'accès simultanés au réseau est garantie par l'acquittement du récepteur : deux émetteurs transmettant simultanément ne reçoivent aucun acquittement, et considèrent que l'accès au canal a échoué. Leur numéro d'abonné dimensionne le délai de réémission, et la différence des numéros d'abonné garantit donc qu'une des stations finira par ré-émettre sa demande d'accès au canal avant l'autre, qui acquittera la demande et laissera donc l'accès à la première station.

L'objet de la présente invention concerne un procédé permettant notamment l'allocation de l'accès d'un support en diffusion pour au moins deux stations en visibilité.

L'invention concerne un procédé d'allocation de l'accès d'un support en diffusion à plusieurs stations caractérisé en ce qu'il comporte au moins les étapes suivantes :
a) coder l'identificateur I de chacune des stations, sur un nombre *n* de bits b1, b2, ... b*n*, en utilisant 2 symboles correspondant respectivement à un état de « réception » et à un état « d'émission »,
b) Pour une station quelconque S*i*, lors d'une tentative d'émission commençant à un créneau d'identification donné,
   b.1) pour i variant de 1 à n
      b.1.1) si la valeur de bi est égale au symbole correspondant à l'état de « réception », la station Si reçoit pendant le créneau k+i-1 :
         ➢ si elle détecte un signal émis par une autre station elle considère qu'elle n'est pas élue ;
         ➢ si elle ne détecte rien elle continue le parcours des bits b*i* b.1.2) si la valeur de bi est égale au symbole correspondant à l'état « d'émission » la station émet pendant le créneau k+i-1;
c) allouer le support en diffusion à la station qui a effectué l'étape b.1) sans recevoir le symbole correspondant à l'état d'émission.

II peut comporter une étape b.0) préalable à l'étape b.1) d'émission du symbole « d'émission » par la station Si et les étapes b.1), b.1.1), b.1.2) peuvent être effectuées sur les créneaux d'identification variant de k +1 à k+n.

Le support en diffusion est par exemple un réseau radio et les stations sont des postes émetteurs-récepteurs.

L'invention concerne aussi un système d'allocation de l'accès d'un support en diffusion à plusieurs stations Si caractérisé en ce que les stations sont pourvues d'un circuit de traitement numérique adapté à exécuter les étapes du procédé présentant l'une des caractéristiques exposée ci-dessus.

Le procédé selon l'invention offre notamment les avantages suivants :
➢ Il permet d'attribuer le support en diffusion de manière équitable entre toutes les stations, sans entraîner de collisions, et en garantissant une utilisation à 100% du support ou le plus proche de 100%,
➢ Sa mise en oeuvre utilise seulement la synchronisation de l'ensemble des stations sur une base de temps commune, et l'attribution au préalable à chaque station d'une identification sous la forme par exemple d'un entier appartenant à un intervalle prédéfini.

D'autres avantages et caractéristiques de la présente invention apparaîtront mieux à la lecture de la description qui suit annexée de la figure unique 1 qui représente un schéma d'architecture de plusieurs stations en réseau.

De manière à mieux faire comprendre le procédé selon l'invention, la description qui suit donnée à titre d'exemple illustratif et nullement limitatif concerne un procédé d'allocation de l'accès de stations, par exemple des postes de radio émetteurs/récepteurs (ou stations) à un réseau radio.

En résumé, le principe de fonctionnement est le suivant : lorsque plusieurs stations souhaitent accéder au réseau radio, elles entament une séquence d'allocation. Lors de cette séquence, toutes les stations Si annoncent simultanément leurs identifications, en suivant un protocole précis, objet de l'invention. A la fin de cette séquence d'allocation, la station Se ayant annoncé le plus grand nombre, est réputée s'être alloué le réseau radio , c'est-à-dire qu'elle l'utilise. Les autres stations Sj savent qu'elles ne sont pas élues. Une fois que la station élue Se a fini d'utiliser le réseau radio, les autres stations réitèrent les étapes du procédé si elles souhaitent s'allouer le réseau radio, c'est-à-dire devenir la station élue. Afin de ne favoriser aucune station, les identifications sont permutées de façon systématique.

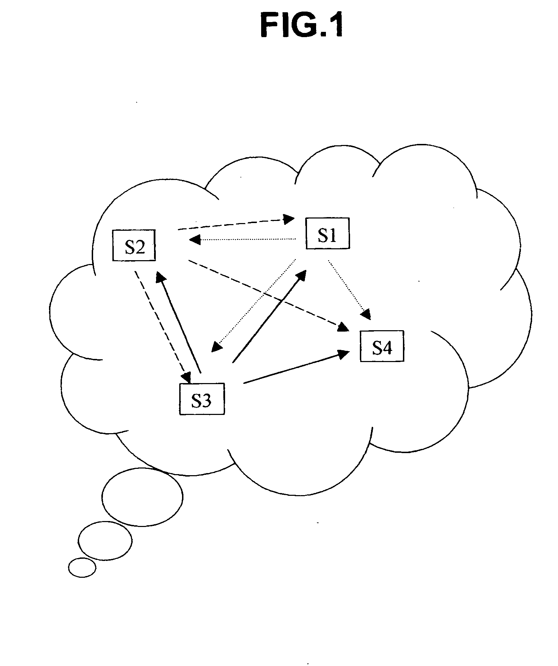

La figure 1 représente une structure de réseau radio comportant plusieurs stations Si. Le réseau radio est en diffusion, ce qui se traduit par le fait que lorsqu'une station Si émet un signal contenant une information ou un message, toutes les autres stations savent qu'un message ou une information a été émis.

Les stations Si sont adaptées afin que :
➢ si plusieurs stations émettent simultanément, toutes les autres stations sont capables de déterminer le fait qu'une au moins des stations a émis une information, même si le contenu des informations ne peut être extrait (par exemple en cas de brouillage des informations émises). Pour cela, les stations possèdent par exemple un calculateur programmé en conséquence.
➢ Les stations Si ont une base de temps commune qui divise le temps en intervalles élémentaires, par exemple en intervalles égaux, appelés par la suite « créneaux d'identification » référencés *k*. Ces créneaux d'identification sont numérotés à partir de 0 avec une référence connue de toutes les stations. Une remise à 0 périodique de cette référence est possible. La durée de cette périodicité est fixée, par exemple, pour conserver un caractère équitable à l'algorithme mis en oeuvre dans le procédé selon l'invention. La base de temps est par exemple assurée par des horloges équipant chacune des stations. Ces horloges sont synchronisées entre elles.

Le procédé définit notamment deux types d'opérations élémentaires :
- opération « recevoir », c'est-à-dire pour une station Si détecter si une autre station S*m* émet quelque chose, un message, pendant le créneau k. Si, lorsqu'elle est dans un état de réception, la station S*i* détecte un signal émis par une station Sj, on dit qu'elle reçoit le symbole « 1 », sinon on dit qu'elle reçoit le symbole « 0 ».
- opération « émettre 1 », la station Si émet un signal quelconque pendant le créneau k. Le contenu du signal émis n'est pas pris en compte pour définir cette opération.

Le procédé selon l'invention comporte au moins les étapes suivantes :

### a) Attribution d'une identification initiale à chaque station Si.

Ceci correspond à attribuer à une station, un numéro d'identification l₀ codé sur un nombre de bits n donné et dont la valeur est prise dans un intervalle prédéfini d'entiers [0, N-1], tel que N=2*ⁿ*. Les identifications initiales des stations Si sont différentes.

Cette attribution est par exemple effectuée par un système de gestion et de configuration extérieur aux stations, connu de l'Homme du métier.

A chaque nouvel intervalle de temps correspondant à un créneau d'identification k, l'identification courante l de la station Si est calculée par la station, en fonction de la valeur initiale l₀ et de la valeur courante de *k*. Un exemple de méthode de calcul de l en fonction de l₀ et de k est fourni plus loin. Ce calcul est réalisé par exemple à l'aide d'un circuit de traitement numérique, tel qu'un processeur ou un ASIC, intégré à la station.

Une station Si qui souhaite s'allouer le réseau radio (c'est-à-dire l'utiliser) entame une séquence d'annonce de son identification. A ce moment son numéro d'identification a une valeur donnée I, dont la représentation binaire s'écrit b₁b₂...bₙ₋₁bₙ. La séquence d'annonce comporte notamment les étapes suivantes :
➢ b.1) pour i variant de 1 à n, i étant l'indice de b,
➢ b.1.1) si bi vaut « 0 », la station Si est dans un état de réception pendant le créneau k+i-1,
   ➢ si la station reçoit le symbole « 1 », elle n'est pas élue. Elle abandonne sa séquence d'allocation (tentative d'émission) puisque le réseau radio va être alloué à une autre station Se. La station Si n'émet plus dans les créneaux suivants jusqu'à ce que la station élue référencée Se ait terminé d'utiliser le réseau radio.
   ➢ si la station reçoit le symbole « 0 », (état de réception) elle continue la boucle b.1).
➢ b.1.2) Si bi vaut « 1 », la station Si est dans un état d'émission, elle émet le symbole « 1 » pendant le créneau k+i-1.
b.2) si la station a effectué les étapes de la boucle b.1) sans recevoir le symbole « 1 », alors elle est décrétée comme étant la station élue, Se.

c) A la fin de la séquence d'allocation, le réseau radio est alloué à la station Se, les autres stations Sj attendent la fin de l'utilisation du réseau radio par cette station élue Se. Pour cela, les stations du réseau sont équipées
d) par exemple d'un calculateur utilisant un algorithme de détection connu par exemple de l'Homme du métier.

Selon une variante de réalisation, une étape supplémentaire b0) est rajoutée avant l'étape b1). Cette étape b0) consiste à émettre pendant le créneau k. Les étapes b1); b.1.1) et b.1.2) s'effectuent lors des créneaux k+1 à k+n, au lieu des créneaux k à k+n-1.

Tant qu'une station est en état de réception, elle peut détecter le démarrage d'une séquence d'allocation initiée par une ou plusieurs autres stations car un tel démarrage se traduit par l'émission d'un symbole « 1 ». Plusieurs stations peuvent démarrer simultanément une séquence d'allocation, la boucle b2) sert à les départager en ce qui concerne l'accès au support.

### Exemple de méthode d'attribution de l'identification courante I en fonction de l'identification Initiale I₀ et de la valeur courante de k

Cette attribution s'effectue par exemple de la manière suivante :

Pour toute valeur de N, on donne à l'algorithme (il s'agit ici de l'algorithme de calcul de I en fonction de I₀ *k*) une donnée de configuration sous la forme par exemple d'une permutation σ de l'intervalle [0, n-1]. Cette permutation a un seul cycle de longueur N.

Comme il a été mentionné précédemment, une station se voit attribuer une identification initiale I₀ dans un intervalle [0, N-1]. Lors de la séquence d'allocation qui démarre au créneau k, l'identification utilisée est σ ^{k}(I₀).

La valeur de σ est choisie de sorte que ses itérations successives, appliquées à un sous-ensemble initial quelconque de l'intervalle [0, N-1] ne favorise aucun des éléments initiaux.

Un exemple de permutation sur l'intervalle [0, 31] est donnée dans le tableau 1 ci-dessous à titre illustratif :

| i | 0 | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|---|
| σ(i) | 14 | 27 | 4 | 19 | 28 | 30 | 16 | 5 | 17 | 24 | 2 | 25 | 18 | 23 | 31 | 21 | 8 | 3 | 0 |
| i | 19 | 20 | 21 | 22 | 23 | 24 | 25 | 26 | 27 | 28 | 29 | 30 | 31 | | | | | | |
| σ (i) | 26 | 11 | 10 | 6 | 12 | 29 | 13 | 9 | 22 | 20 | 15 | 1 | 7 | | | | | | |

### Exemple de mise en oeuvre du procédé

L'exemple qui suit est donné pour un réseau radio avec 4 stations présentes.
Supposons que :
➢ *N* = 32
➢ 4 stations A, B, C et D sont en présence dans le réseau radio, leurs identifications initiales sont respectivement 11, 12, 13 et 22.
➢ La permutation σ choisie dans l'implémentation est celle donnée dans le tableau 1 en exemple ci-dessus.

On considère uniquement les cas où les stations démarrent simultanément des séquences d'allocation. Pour chaque station, on indique par le symbole « ↑1 » l'opération « émettre 1 » et par les symboles « ↓0 » et « ↓1 » les opérations « recevoir 0 » et « recevoir 1 ».

Supposons qu'une séquence d'allocation démarre avec le créneau d'identification k = 3827. k modulo 32 = 19, donc l'itération de la permutation est σ³⁸²⁷ = σ¹⁹. Les valeurs d'identification des stations A, B, C et D sont donc respectivement σ¹⁹(11 ) = 3, σ¹⁹(12) = 24, σ¹⁹(13) = 26 et σ¹⁹(22) = 25. Les représentations binaires correspondantes sont A : 00011, B : 11000, C:11010et D:11001.
Le tableau 2 ci-dessous décompose bit par bit la représentation binaire des identifications des stations :

| | b1 | b2 | b3 | b4 | b5 |
|---|---|---|---|---|---|
| A | 0 | 0 | 0 | 1 | 1 |
| B | 1 | 1 | 0 | 0 | 0 |
| C | 1 | 1 | 0 | 1 | 0 |
| D | 1 | 1 | 0 | 0 | 1 |

Le comportement des stations sera alors :

| | | | | | | |
|---|---|---|---|---|---|---|
| Créneau | *K* | *k + 1* | *k + 2* | *k + 3* | *k + 4* | *k + 5* |
| A : | ↑1 | ↓1 abandon | ↓1 | ↓0 | ↓1 | ↓0 |
| B : | ↑1 | ↑1 | ↑1 | ↓0 | ↓1 abandon | ↓0 |
| C : | T1 | ↑1 | ↑1 | ↓0 | ↑1 | ↓0 |
| D : | ↑1 | ↑1 | ↑1 | ↓0 | ↓1 abandon | ↓0 |

La station C est élue car elle ne reçoit jamais le symbole d'émission « 1 ».

Les étapes du procédé d'allocation de l'accès décrit précédemment sont utilisées par exemple dans le cas d'un réseau radio comportant plusieurs postes émetteurs-récepteurs pourvus de circuit de traitement numérique, tel qu'un ASIC programmé pour exécuter les étapes précédemment décrites ou encore un processeur programmé.

La détection de « l'activité» d'un poste est par exemple effectuée par détection de niveaux. Par exemple, l'opération « émettre 1 » correspond à l'émission d'un bruit. Ainsi, le brouillage entre les stations n'aura pas pour résultat la diminution du niveau reçu.

Le procédé selon l'invention s'applique aussi pour un réseau local pourvus d'équipements informatiques tels que des micro-ordinateurs.

## Revendications

1. Procédé d'allocation de l'accès d'un support en diffusion à plusieurs stations **caractérisé en ce qu'**il comporte au moins les étapes suivantes :
a) coder l'identificateur I de chacune des stations, sur un nombre *n* de bits b1, b2, ... b*n*, en utilisant 2 symboles correspondant respectivement à un état de « réception » et à un état « d'émission »,
b) Pour une station quelconque S*i*, lors d'une tentative d'émission commençant à un créneau d'identification donné, k,
b.1) pour i variant de 1 à n
b.1.1) si la valeur de bi est égale au symbole correspondant à l'état « d'écoute », la station SI reçoit pendant le créneau k+i-1:
➢ si elle détecte un signal émis par une autre station elle considère qu'elle n'est pas élue ;
➢ si elle ne détecte rien elle continue le parcours des bits b*i* b.1.2) si la valeur de bi est égale au symbole correspondant à l'état « d'émission » la station émet pendant le créneau k+i -1;
c) allouer le support en diffusion à la station qui a effectué l'étape b.1) sans recevoir le symbole caractéristique de l'état d'émission.

2. Procédé selon la revendication 1 **caractérisé en ce qu'**il comporte une étape b.0) préalable à l'étape b.1) d'émission du symbole « d'émission » par la station Si et **en ce que** les étapes b.1), b.1.1), b.1.2) sont effectuées sur les créneaux d'identification variant de k +1 à k+n.

3. Procédé selon l'une des revendications 1 et 2 **caractérisé en ce que** l'on utilise le codage en base binaire et l'opération « recevoir », « reçoit 1 » lorsqu'une station détecte un signal provenant d'une autre station et « reçoit 0 » lorsqu'elle ne reçoit pas de signal et l'opération « émettre 1 » lorsque la station émet un signal dans un créneau donné.

4. Procédé selon l'une des revendications 1 à 3 **caractérisé en ce que** l'on utilise un numéro d'identificateur pris dans un intervalle [0, N-1] avec N=2".

5. Procédé selon la revendication 4 **caractérisé en ce que** l'on fait varier les numéros d'identification par application d'une permutation de l'intervalle.

6. Procédé selon l'une des revendications précédentes **caractérisé en ce que** le support en diffusion est un réseau radio et **en ce que** les stations sont des postes émetteurs-récepteurs.

7. Système d'allocation de l'accès d'un support en diffusion à plusieurs stations Si **caractérisé en ce que** les stations sont pourvues d'un circuit de traitement numérique adapté à exécuter les étapes du procédé selon l'une des revendications 1 à 6.

8. Système selon la revendication 7 **caractérisé en ce qu'**il comporte un dispositif de configuration des stations disjoint des stations.

## Claims

1. A method for allocating access of a distribution system to a plurality of stations, **characterised in that** it comprises at least the following steps:
a) coding the identifier 1 of each of the stations, on a number *n* of bits b1, b2, ... b*n*, by using 2 symbols that respectively correspond to a "receiving" and an "emitting" state,
b) for any station S*i*, during an emission attempt beginning at a given identification slot, k,
b.1) for i varying from 1 to n,
b.1.1) receiving, by the station S1, if the value of bi is equal to the symbol that corresponds to the "listening" state during slot k+i-1:
➢ it detects a signal emitted by another station it considers that it is not elected;
➢ if it does not detect anything it continues the path of the bits b*i*;
b.1.2) emitting, by the station, if the value of bi is equal to the symbol that corresponds to the "emitting" state, during the slot k+i-1;
c) assigning the media access to the station that completed step b.1) without receiving the symbol that is characteristic of the emitting state.

2. The method according to claim 1, **characterised in that** it comprises a step b.0), prior to step b.1), of emitting the "emission" symbol by the station Si, and **in that** steps b.1), b.1.1) and b.1.2) are carried out on the identification slots that vary from k+1 to k+n.

3. The method according to any one of claims 1 to 2, **characterised in that** the following is used: binary based coding and the "receive" operation, "receive 1" when a station detects a signal that originates from another station and "receive 0" when it does not receive a signal, and the "emission 1" operation when the station emits a signal in a given slot.

4. The method according to any one of claims 1 to 3, **characterised in that** an identifier number is used that is taken in an interval [0, N-1] with N=2'.

5. The method according to claim 4, **characterised in that** the identification numbers are varied by applying a permutation of the interval.

6. The method according to any one of the preceding claims, **characterised in that** the access control distribution system is a radio network and **in that** the stations are emitter- receiver stations.

7. A method for allocating access in a distribution system including a plurality of stations Si, **characterised in that** the stations are provided with a digital processing circuit that is designed to execute the steps of the method according to any one of claims 1 to 6.

8. The system according to claim 7, **characterised in that** it comprises a device for configuring stations that are separated from stations.

## Patentansprüche

1. Verfahren zum Zuweisen von Zugang von einem Medienzugangsverteilungssystem zu mehreren Stationen, **dadurch gekennzeichnet, dass** es wenigstens die folgenden Schritte beinhaltet:
a) Codieren der Kennung I jeder der Stationen auf einer Anzahl *n* von Bits b1, b2, ... b*n* mittels 2 Symbolen, die jeweils einem "Empfangs"-Zustand und einem "Sende"-Zustand entsprechen,
b) für eine beliebige Station S*i* bei einem Sendeversuch beginnend mit einem *gegebenen Kennungsschlitz k,*
b.1) wobei i von 1 bis n variiert,
b.1.1) Empfangen durch die Station Si, wenn der Wert von bi gleich dem Symbol ist, das dem "Horch"-Zustand entspricht, während des Schlitzes k+i-1:
* wenn sie ein von einer anderen Station gesendetes Signal erkennt, dann betrachtet sie es als nicht gewählt;
* wenn sie nichts erkennt, dann setzt sie den Verlauf der Bits b*i* fort;
b.1.2) Senden durch die Station, wenn der Wert von bi gleich dem Symbol ist, das dem "Sende"-Zustand entspricht, während des Schlitzes k+i-1;
c) Zuweisen des Medienzugangs zu der Station, die Schritt b.1) bewirkt hat, ohne das für den Sendezustand charakteristische Symbol zu empfangen.

2. Verfahren nach Anspruch 1, **dadurch gekennzeichnet, dass** es einen Schritt b.0) vor Schritt b.1) des Sendens des "Sende"-Symbols durch die Station Si beinhaltet, und dadurch, dass die Schritte b.1) b.1.1), b.1.2) auf den von k+1 bis k+n variierenden Kennungsschlitzen erfolgen.

3. Verfahren nach einem der Ansprüche 1 und 2, **dadurch gekennzeichnet, dass** Folgendes angewendet wird: eine binäre Codierung und der Vorgang "Empfangen" - "Empfangen 1", wenn eine Station ein Signal von einer anderen Station erkennt, und "Empfangen 0", wenn sie kein Signal empfängt, und der Vorgang "Senden 1", wenn die Station ein Signal in einem gegebenen Schlitz sendet.

4. Verfahren nach einem der Ansprüche 1 bis 3, **dadurch gekennzeichnet, dass** eine in einem Intervall [0, N-1] mit N=2ⁿ genommene Kennzahl verwendet wird.

5. Verfahren nach Anspruch 4, **dadurch gekennzeichnet, dass** die Kennzahlen durch Anwenden einer Permutation des Intervalls variiert werden.

6. Verfahren nach einem der vorherigen Ansprüche, **dadurch gekennzeichnet, dass** das Medienzugangsverteilungssystem ein Funknetz ist, und dadurch, dass die Stationen Sender-Empfänger-Geräte sind.

7. System zum Zuweisen von Zugang in einem Medienzugangsverteilungssystem zu mehreren Stationen Si, **dadurch gekennzeichnet, dass** die Stationen mit einem digitalen Verarbeitungsschaltkreis versehen sind, der zum Ausführen der Schritte des Verfahrens nach einem der Ansprüche 1 bis 6 ausgebildet ist.

8. System nach Anspruch 7, **dadurch gekennzeichnet, dass** es eine Vorrichtung zum Konfigurieren von von Stationen disjunkten Stationen umfasst.
